# EUROPÄISCHE PATENTANMELDUNG

(11) **EP 1 216 902 A2**
(43) Veröffentlichungstag der Anmeldung: **26.06.2002**
(21) Anmeldenummer: 01129822.1
(22) Anmeldetag: 14.12.2001
(51) Int. Cl.: B60S 1/48

(54) **Reinigungsvorrichtung für Fahrzeuge, vorzugsweise Kraftfahrzeuge**

(30) Priorität: 20.12.2000 DE 20021641 U
(71) Anmelder: Reitter & Schefenacker GmbH & Co. KG, 73730 Esslingen (DE)
(72) Erfinder: Schlosser, Stefan, 89264 Weissenhorn (DE); Steinbach, Bernd, 89150 Laichingen (DE)
(74) Vertreter: Kohl, Karl-Heinz

(57) **Zusammenfassung**

Die Reinigungsvorrichtung ist für Fahrzeuge vorgesehen und kann an den unterschiedlichsten Stellen im Kraftfahrzeug eingebaut werden. Sie weist einen Vorratsbehälter (1) für Reinigungsflüssigkeit sowie eine Leitung (3) auf, in der die Reinigungsflüssigkeit mit einer Pumpe (2) zu einer Düse (4) gefördert werden kann. Um eine optimale Reinigungswirkung zu erzielen, ist an die Leitung (3) ein Hochdruckverdichter (5) angeschlossen, mit dem die Reinigungsflüssigkeit unter Druck gesetzt werden kann. Beim Betätigen der Vorrichtung tritt die Reinigungsflüssigkeit mit hohem Druck aus der Düse aus, so daß mit ihr fest anhaftender Schmutz ohne Mühe entfernt werden kann.

## Beschreibung

Die Erfindung betrifft eine Reinigungsvorrichtung für Fahrzeuge, vorzugsweise Kraftfahrzeuge, nach dem Oberbegriff des Anspruches 1.

Bei Kraftfahrzeugen ist es bekannt, die Windschutzscheibe, die Heckscheibe sowie die Scheinwerfer mit einer Reinigungsflüssigkeit, in der Regel Wasser, zu reinigen. Die Reinigungsflüssigkeit wird mit einer Pumpe den jeweiligen Düsen zugeführt. Hartnäckig anhaftender Schmutz läßt sich häufig nicht oder nur ungenügend mit der Reinigungsflüssigkeit entfernen.

Der Erfindung liegt die Aufgabe zugrunde, die gattungsgemäße Reinigungsvorrichtung so auszubilden, daß eine optimale Reinigungswirkung erzielt wird.

Diese Aufgabe wird bei der gattungsgemäßen Reinigungsvorrichtung erfindungsgemäß mit den kennzeichnenden Merkmalen des Anspruches 1 gelöst.

Bei der erfindungsgemäßen Reinigungsvorrichtung wird die Reinigungsflüssigkeit durch den Hochdruckverdichter unter hohen Druck gesetzt. Bei Betätigung der Reinigungsvorrichtung tritt darum die Reinigungsflüssigkeit mit hohem Druck aus der Düse aus. Mit der unter hohem Druck stehenden Reinigungsflüssigkeit läßt sich fest anhaftender Schmutz ohne Mühe entfernen.

Weitere Merkmale der Erfindung ergeben sich aus den weiteren Ansprüchen, der Beschreibung und den Zeichnungen.

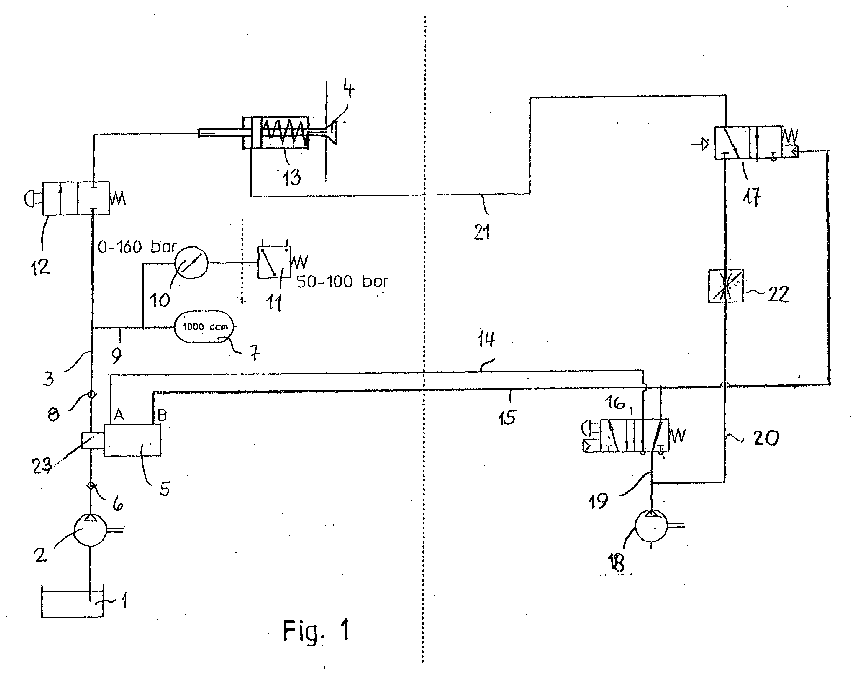

Die Erfindung wird anhand eines in den Zeichnungen dargestellten Ausführungsbeispieles näher erläutert. Die Zeichnungen zeigen in den Fig. 1 bis 3 jeweils einen Schaltplan einer erfindungsgemäßen Reinigungseinrichtung in unterschiedlichen Schaltzuständen.

Die Reinigungseinrichtung ist für Fahrzeuge, insbesondere Kraftfahrzeuge, vorgesehen und kann an den unterschiedlichsten Stellen im Kraftfahrzeug eingebaut werden. So kann mit der Reinigungseinrichtung die Windschutzscheibe und/oder die Heckscheibe des Kraftfahrzeuges gereinigt werden. Ebenso kann die Reinigungseinrichtung zur Reinigung der Scheinwerfer und/oder der Heckleuchten des Fahrzeuges eingesetzt werden. Es ist ferner möglich, mit der Reinigungseinrichtung das Spiegelglas des Außenrückblickspiegels, die äußere Linse von Rückblick- oder Überwachungskameras oder dergleichen zu reinigen.

Die Reinigungsflüssigkeit, vorzugsweise Wasser, befindet sich in einem Vorratsbehälter 1, der in bekannter Weise im Fahrzeug an geeigneter Stelle untergebracht ist. Die Reinigungsflüssigkeit wird mit einer Pumpe 2 gefördert, die an die Fahrzeugbatterie angeschlossen ist und die Reinigungsflüssigkeit über eine Leitung 3 zu einer Düse 4 fördert, aus der die Reinigungsflüssigkeit austritt. In der Leitung 3 sitzt ein Verdichter 5, der gegen die Pumpe 2 durch ein Rückschlagventil 6 gesichert ist. Der Verdichter 5 ist bekannt und in der DE 44 29 255 A1 im einzelnen beschrieben. Mit ihm wird die Reinigungsflüssigkeit unter Hochdruck gesetzt. Mit dem Verdichter 5 ist es möglich, den Druck in etwa 3 cl Flüssigkeit um ca. das Zehnfache zu erhöhen. Die unter Hochdruck stehende Reinigungsflüssigkeit gelangt in einen Druckspeicher 7, der durch ein Rückschlagventil 8 in der Leitung 3 gegen den Verdichter 5 abgesichert ist. An eine Zuleitung 9, die von der Leitung 3 zum Druckspeicher 7 abzweigt, ist ein Manometer 10 angeschlossen, mit dem der Druck der Reinigungsflüssigkeit überwacht werden kann. An das Manometer 10 kann ein Druckschalter 11 angeschlossen sein.

In Strömungsrichtung hinter der Zuleitung 9 sitzt in der Leitung 3 ein von Hand betätigbares Ventil 12, mit dem der Zufluß der Reinigungsflüssigkeit zur Düse 4 gesteuert werden kann. Der Düse 4 vorgeschaltet ist ein Hubzylinder 13, mit dem in noch zu beschreibender Weise die Düse 4 aus einer Ruhestellung in eine Arbeitsstellung verfahren werden kann.

Der Verdichter 5 hat zwei Anschlüsse A, B, die jeweils über eine Pneumatikleitung 14, 15 mit einem Ventil 16, 17 verbunden sind. Das Ventil 16 ist ein Mehrwegventil, das an einen Kompressor 18 angeschlossen ist. Er ist über eine Leitung 19 mit dem Ventil 16 und über eine Leitung 20 mit dem Ventil 17 verbunden, das seinerseits über eine Pneumatikleitung 21 mit dem Hubzylinder 14 verbunden ist. In der Leitung 20 sitzt zwischen den beiden Ventilen 16, 17 ein Drosselventil 22.

In der Stellung der Ventile gemäß Fig. 1 wird die Reinigungsflüssigkeit unter Hochdruck gesetzt und im Druckspeicher 7 gespeichert. Das Ventil 12 ist geschlossen, so daß die Reinigungsflüssigkeit nicht zur Düse 4 gelangen kann. Auch das Ventil 17 ist geschlossen, während das Ventil 16 so geschaltet ist, daß der Anschluß B des Verdichters 5 mit dem Kompressor 18 verbunden ist. Der Anschluß A wird entlüftet. Aufgrund der Druckbeaufschlagung des Verdichters 5 werden Verdichterkolben 23 in Fig. 1 nach links verschoben, wodurch die in der Leitung 3 strömende Reinigungsflüssigkeit unter Druck gesetzt wird.

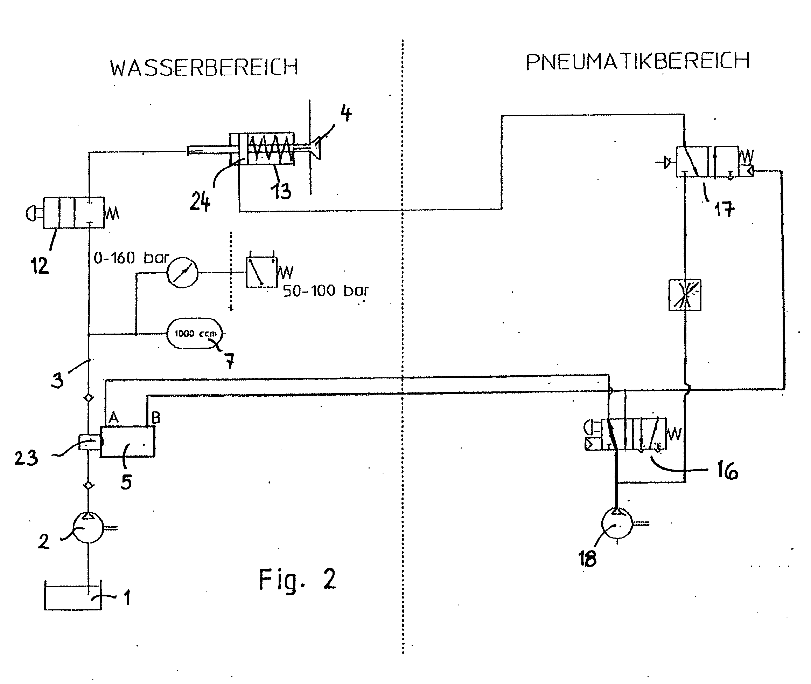

Um die Reinigungsflüssigkeit anzusaugen, wird das Ventil 16 so umgeschaltet (Fig. 2), daß der Kompressor 18 mit dem Anschluß A des Verdichters 5 verbunden wird. Dadurch wird der Anschluß A des Verdichters 5 unter Druck gesetzt, während der Anschluß B entlüftet wird. Aufgrund des am Anschluß A des Verdichters 5 anstehenden Druckes werden die Verdichterkolben 23 zurückgezogen, wodurch die Reinigungsflüssigkeit aus dem Vorratsbehälter 1 angesaugt und über die Pumpe 2 und die Leitung 3 zum Druckspeicher 7 gefördert wird. Das Handventil 12 bleibt geschlossen, so daß die Reinigungsflüssigkeit nicht zur Düse 4 gelangen kann.

Das Ventil 16 wird so lange hin- und hergeschaltet (Fig. 1 und 2), bis ein genügend hoher Druck im Druckspeicher 7 herrscht. Der Druck kann bis zu 100 bar betragen. Die Rückschlagventile 6, 8 sorgen dafür, daß die unter Druck stehende Reinigungsflüssigkeit nicht wieder zur Pumpe 2 zurückströmen kann. Dieses ständige Umschalten des Ventils 16 erfolgt vorzugsweise automatisch, bis im Druckspeicher 7 ein vorgegebener Druck erreicht wird. Dann wird, sofern der Druckschalter 11 vorgesehen ist, dieser Schalter betätigt, so daß die Umschaltung des Ventils 16 beendet wird. Die Verdichterkolben 23 werden in der beschriebenen Weise ständig ein- und ausgefahren. Beim Einfahren der Verdichterkolben 23 wird die Reinigungsflüssigkeit in Verbindung mit der Pumpe 2 aus dem Vorratsbehälter 1 angesaugt. Das Rückschlagventil 6 verhindert, daß beim anschließenden Ausfahren der Verdichterkolben 23 die Reinigungsflüssigkeit wieder zurück in den Vorratsbehälter 1 gedrückt wird. Die Flüssigkeit wird in der Leitung 3 unter dem Druck in den Druckspeicher 7 gefördert und unter Druck gesetzt. Das Rückschlagventil 8 verhindert, daß die unter Druck stehende Reinigungsflüssigkeit aus dem Druckspeicher 7 wieder zurück in Richtung auf den Vorratsbehälter 1 strömen kann.

Der Druckspeicher 7 ist so bemessen, daß ausreichend Reinigungsflüssigkeit zur Verfügung steht, um die verschiedenen Bereiche am Kraftfahrzeug im Bedarfsfall zu reinigen.

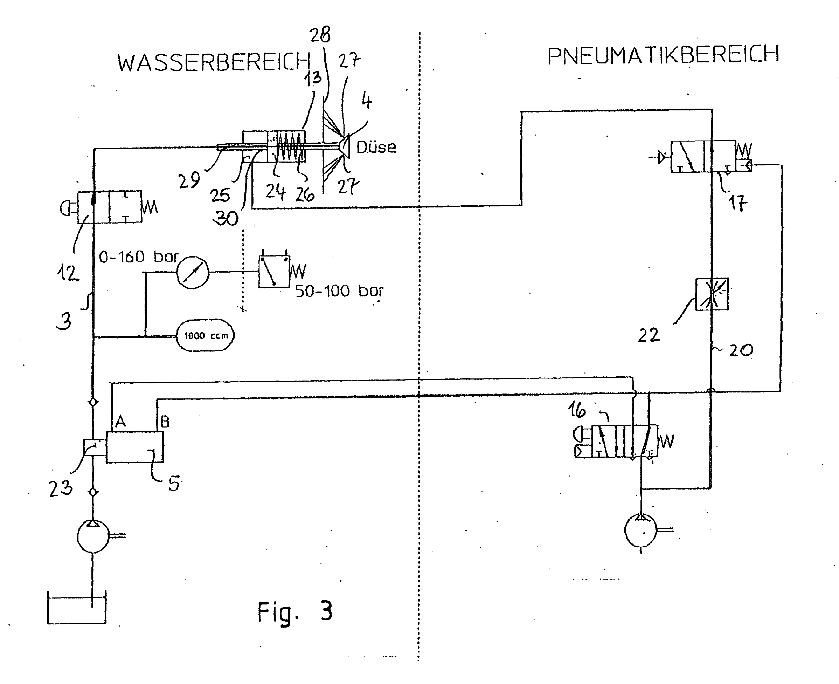

Soll ein Reinigungsvorgang durchgeführt werden, dann wird das Handventil 12 umgeschaltet, so daß die unter Hochdruck stehende Reinigungsflüssigkeit über die Leitung 3 zur Düse 4 gelangen kann. Das Ventil 17 ist so geschaltet, daß der Druckraum 25 des Hubzylinders 13 unter Druck gesetzt wird. Dadurch wird der Kolben 24 gegen eine Gegenkraft, vorzugsweise gegen die Kraft wenigstens einer Druckfeder 26, in Fig. 3 nach rechts verschoben. Mit dem Kolben 24 ist die Düse 4 verbunden, die dementsprechend aus ihrer in den Fig. 1 und 2 dargestellten Ruhestellung in die Fig. 3 dargestellte Reinigungsstellung ausgefahren wird. Die aus Austrittsöffnungen 27 der Düse 4 mit hohem Druck austretende Reinigungsflüssigkeit trifft auf die zu reinigende Fläche 28, die aufgrund des unter hohem Druck stehenden Reinigungsmittels optimal gereinigt wird. Die Reinigungsflüssigkeit wird durch eine Bohrung 29 im Kolben 24 sowie in einer Kolbenstange 30 zur Düse 4 geleitet.

Mit dem Drosselventil 22 in der Leitung 20 kann die Verschiebegeschwindigkeit des Kolbens 24 und damit die Ausfahrgeschwindigkeit der Düse 4 eingestellt werden. Das Drosselventil 22 ist zu diesem Zweck einstellbar.

Soll der Reinigungsvorgang beendet werden, wird das Handventil 12 geschlossen, so daß die Zufuhr der Reinigungsflüssigkeit zur Düse 4 unterbrochen wird. Gleichzeitig mit dem Schließen des Ventils 12 wird auch das Ventil 17 umgeschaltet, so daß der Druckraum 25 entlüftet wird. Die Druckfeder 26 kann dadurch den Kolben 24 und damit die Düse 4 in die Ausgangsstellung zurückschieben.

Während des Reinigungsprozesses ist das Ventil 16 so geschaltet, daß der Anschluß B des Verdichters 5 mit Druck beaufschlagt wird, so daß die Verdichterkolben 23 ausgefahren sind.

Nach Beendigung des Reinigungsprozesses werden die Verdichterkolben 23 in der beschriebenen Weise durch Hin- und Herschalten des Ventils 16 ein- und ausgefahren, um aus dem Vorratsbehälter 1 Reinigungsflüssigkeit anzusaugen, dem Druckspeicher zuzuführen und unter Hochdruck zu setzen. Damit steht wieder ausreichend Reinigungsflüssigkeit für den nächsten Reinigungsvorgang zur Verfügung.

Die Ventile 16, 17, 22, der Verdichter 5 und der Hubzylinder 13 werden vorzugsweise pneumatisch betrieben, da im Kraftfahrzeug eine entsprechende Pneumatik zur Verfügung steht. Es ist aber auch möglich, diese Bauteile hydraulisch zu betätigen.

Die Düsen 4 können die unterschiedlichsten Formen und Ausgestaltungen haben, je nach dem vorgesehenen Reinigungszweck und/oder der Ausgestaltung der zu reinigenden Fläche 28. Die Düsen 4 müssen auch nicht ein- und ausfahrbar sein, wie im dargestellten und beschriebenen Ausführungsbeispiel angegeben. So können beispielsweise die Düsen, die zur Reinigung der Windschutzscheibe eines Kraftfahrzeuges dienen, auch fest vorgesehen sein. In diesem Fall sind der Hubzylinder 13, das Ventil 17 und das Drosselventil 22 nicht erforderlich.

Die Düse 4 kann so gestaltet sein, daß sie nur eine einzige Düsenöffnung 27 für die auszusprühende Reinigungsflüssigkeit aufweist. Je nach Größe und/oder Form der zu reinigenden Fläche 28 können auch zwei oder mehr Düsenöffnungen vorgesehen sein.

Bei der Reinigung der Außenseite des Spiegelglases des Außenrückblickspiegels kann im Randbereich des Spiegelkopfgehäuses wenigstens eine Düsenöffnung vorgesehen sein, aus welcher die unter Hochdruck stehende Reinigungsflüssigkeit von der Seite her flach auf die Spiegelglasaußenseite gelangt. Es reicht aus, wenn nur an einer Seite des Spiegelkopfgehäuses eine solche Düse vorgesehen ist, da infolge der unter Hochdruck stehenden Reinigungsflüssigkeit das Spiegelglas optimal gereinigt werden kann. Es ist selbstverständlich möglich, beispielsweise an zwei einander gegenüberliegenden Seiten des Spiegelkopfgehäuses jeweils wenigstens eine Düse 4 vorzusehen, so daß das Spiegelglas des Außenrückblickspiegels von zwei einander gegenüberliegenden Seiten aus mit Hochdruck besprüht wird. Es ist selbstverständlich möglich, bei einem rechteckigen Spiegelglas von allen vier Seiten aus das Spiegelglas mit der Reinigungsflüssigkeit zu besprühen.

## Patentansprüche

1. Reinigungsvorrichtung für Fahrzeuge, vorzugsweise Kraftfahrzeuge, mit wenigstens einem Vorratsbehälter für Reinigungsflüssigkeit und wenigstens einer Leitung, in der die Reinigungsflüssigkeit mittels wenigstens einer Pumpe zu mindestens einer Düse förderbar ist,
**dadurch gekennzeichnet, daß** an die Leitung (3) wenigstens ein Hochdruckverdichter (5) angeschlossen ist, mit dem die Reinigungsflüssigkeit unter Druck setzbar ist.

2. Vorrichtung nach Anspruch 1,
**dadurch gekennzeichnet, daß** an den Hochdruckverdichter (5) ein Kompressor (18) angeschlossen ist.

3. Vorrichtung nach Anspruch 2,
**dadurch gekennzeichnet, daß** der Kompressor (18) über ein Schaltventil (16) an den Hochdruckverdichter (5) angeschlossen ist.

4. Vorrichtung nach einem der Ansprüche 1 bis 3,
**dadurch gekennzeichnet, daß** in der Leitung (3) zwischen der Pumpe (2) und dem Hochdruckverdichter (5) ein gegen die Pumpe (2) sperrendes Rückschlagventil (6) sitzt.

5. Vorrichtung nach einem der Ansprüche 1 bis 4,
**dadurch gekennzeichnet, daß** die unter Druck stehende Reinigungsflüssigkeit in wenigstens einem, vorteilhaft über eine Querleitung (9) an die Leitung (3) angeschlossenen Druckspeicher (7) speicherbar ist.

6. Vorrichtung nach Anspruch 5,
**dadurch gekennzeichnet, daß** der Druckspeicher (7) dem Hochdruckverdichter (5) nachgeschaltet ist.

7. Vorrichtung nach einem der Ansprüche 5 oder 6,
**dadurch gekennzeichnet, daß** zwischen dem Druckspeicher (7) und dem Hochdruckverdichter (5) ein gegen den Hochdruckverdichter (5) sperrendes Rückschlagventil (8) angeordnet ist.

8. Vorrichtung nach einem der Ansprüche 1 bis 7,
**dadurch gekennzeichnet, daß** dem Hochdruckverdichter (5) ein Schaltventil (12) nachgeschaltet ist, mit dem die Zufuhr der Reinigungsflüssigkeit zur Düse (4) steuerbar ist.

9. Vorrichtung nach einem der Ansprüche 1 bis 8,
**dadurch gekennzeichnet, daß** die vorteilhaft an einer Ausfahreinrichtung (13) vorgesehene Düse (4) aus einer Ruhestellung in eine Reinigungsstellung verstellbar ist.

10. Vorrichtung nach Anspruch 9,
**dadurch gekennzeichnet, daß** die Ausfahreinrichtung (13) durch den Kompressor (18) betätigbar ist.

11. Vorrichtung nach Anspruch 10,
**dadurch gekennzeichnet, daß** in der Leitungsverbindung (20) vom Kompressor (18) zur Ausfahreinrichtung (13) ein Schaltventil (17) sitzt.

12. Vorrichtung nach Anspruch 10 oder 11,
**dadurch gekennzeichnet, daß** die Ausfahreinrichtung (13) einen, vorzugsweise gegen eine Gegenkraft verschiebbaren Kolben (24) aufweist, auf dessen Kolbenstange (29) die Düse (4) sitzt und der vorteilhaft einen Druckraum (25) begrenzt, der mit dem Schaltventil (17) verbunden ist.

13. Vorrichtung nach Anspruch 12,
**dadurch gekennzeichnet, daß** die Verschiebegeschwindigkeit des Kolbens (24) verstellbar ist, und daß vorteilhaft zwischen dem Kompressor (18) und dem Schaltventil (17) ein einstellbares Drosselventil (22) sitzt.

14. Vorrichtung nach einem der Ansprüche 1 bis 13,
**dadurch gekennzeichnet, daß** der Hochdruckverdichter (5) wenigstens einen Verdichterkolben (23) aufweist.
